(19) Europäisches Patentamt
European Patent Office
Office européen des brevets

(11) **EP 1 583 906 B1**

(12) **EUROPÄISCHE PATENTSCHRIFT**

(45) Veröffentlichungstag und Bekanntmachung des Hinweises auf die Patenterteilung:
**06.05.2015 Patentblatt 2015/19**

(21) Anmeldenummer: **03799486.0**

(22) Anmeldetag: **17.12.2003**

(51) Int Cl.:
*F03D 11/00* *(2006.01)*

(86) Internationale Anmeldenummer:
**PCT/EP2003/014394**

(87) Internationale Veröffentlichungsnummer:
**WO 2004/055366 (01.07.2004 Gazette 2004/27)**

(54) **LASTAUFNEHMERANORDNUNG FÜR WINDTURBINENFLÜGEL**

LOAD-RECEIVING ARRANGEMENT FOR WIND TURBINE WINGS

DISPOSITIF RECEPTEUR DE CHARGE POUR AILES DE TURBINE EOLIENNE

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**LT LV**

(30) Priorität: **18.12.2002 DE 10259680**

(43) Veröffentlichungstag der Anmeldung:
**12.10.2005 Patentblatt 2005/41**

(60) Teilanmeldung:
**10174153.6 / 2 284 393**

(73) Patentinhaber: **Wobben Properties GmbH**
**26605 Aurich (DE)**

(72) Erfinder: **Aloys Wobben**
**26607 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A- 1 359 321     WO-A-03/050412**
**DE-A- 10 113 039     US-A- 4 026 660**

EP 1 583 906 B1

## Beschreibung

Die vorliegende Erfindung betrifft ein Verfahren und eine Vorrichtung zur Messung der Durchbiegung oder Längenänderung eines Erzeugnisses, nämlich eines Rotorblattes oder eines Turms einer Windenergieanlage.

Aus der EP-A-1 359 321 ist eine Windenergieanlage mit einem Turm und mit einem mindestens ein Rotorblatt aufweisenden Rotor bekannt, wobei mit Hilfe von Dehnungsmessstreifen eine mechanische Belastung des Rotorblattes festgestellt wird.

Aus der DE-A-101 13 039 ist eine Windenergie an Lage bekannt, die eine Einrichtung zum Erfassung der Belastung an Turm aufweist.

Aufgabe der vorliegenden Erfindung ist es, eine Windengergieanlage, welche wenigstens ein Rotorblatt und einen Turm aufweist, anzugeben, bei dem die Durchbiegung des Rotorblattes bzw. und/oder des Turmes mit einfachen Mitteln erfasst werden kann.

Die Aufgabe wird erfindungsgemäß mit einer Windenergieanlage mit den Merkmalen nach Anspruch 1 und 2, sowie ein Verfahren gemäß Anspruch 6 gelöst. Vorteilhafte Weiterbildungen sind in den Unteransprüchen beschrieben.

Soweit in den nachfolgenden Unterlagen eine Variante beschrieben ist, der gemäß der elektrische Widerstand eines Leiters, der im Rotorblatt der Windenergieanlage verlegt ist, bewertet bzw. ausgewertet wird, um daraus eine Längendehnung des Rotorblattes bzw. einer Durchbiegung des Rotorblattes auf Basis einer Widerstandsänderung zu ermitteln, wird darauf aufmerksam gemacht, dass diese Variante, die von der Widerstandsänderung bei Dehnung/Durchbiegung des Leiters ausgeht, nicht mehr zu der Erfindung gehörig nach einem der Ansprüche ist. Jedoch wird die Offenbarung dieses Teils in den vorliegenden Unterlagen beibehalten, um das gesamte Verständnis zu ermöglichen.

Dabei liegt der nicht mehr zur Erfindung gehörigen Variante die Erkenntnis zugrunde, dass eine Durchbiegung des Rotorblattes stets zur Streckung der Tragstruktur führt und dass eine solche Streckung, übertragen auf einen elektrischen Leiter, zu einer Änderung des elektrischen Widerstands des Leiters führt.

Da diese Widerstandsänderung proportional zur Streckung des Leiters ist, ist die Widerstandsänderung proportional zur Durchbiegung des Rotorblattes. Im einfachsten Fall kann ein Grenzwert für eine Widerstandsänderung vorgegeben werden, dessen Überschreiten gleichzeitig eine strukturschädigende Durchbiegung des Rotorblattes anzeigt. Die Erkennung dieser Situation erlaubt daher einen rechtzeitigen Austausch bzw. eine Prüfung des Rotorblattes, um festzustellen, ob das Rotorblatt ersetzt werden muss oder nicht.

In einer bevorzugten Ausführungsform der Erfindung wird aus der Belastung des Rotorblattes auf die Belastung der Windenergieanlage zurückgeschlossen und die Windenergieanlage kann bei Überschreiten eines vorgegebenen Grenzwertes abgeschaltet werden. Dadurch werden weitere und auch stärkere Belastungen zuverlässig vermieden.

Um eine temperaturabhängige Widerstandsänderung des elektrischen Leiters kompensieren zu können und/oder mehrere Messergebnisse bereit zu stellen, ist eine Mehrzahl von elektrischen Leitern vorgesehen. Diese Leiter verlaufen in Rotorblattlängsrichtung und sind an einem Detektor angeschlossen. Dabei können mehrere Leiter an einen Detektor oder jeder Leiter an einen eigenen Detektor angeschlossen sein. Der zur Temperaturkompensation vorgesehene Leiter wird derart angeordnet, dass er der Biegebeanspruchung nicht unterworfen ist und deshalb nur eine temperaturabhängige Widerstandsänderung erfährt. Dadurch ist die temperaturbedingte Widerstandsänderung bekannt und kann entsprechend berücksichtigt werden.

Eine Mehrzahl von Leitern erlaubt auch eine redundante Verwendung. Im Fall einer Störung eines Leiters kann die Widerstandsänderung durch die redundanten Leiter immer noch sicher erfasst werden. Dadurch entfällt die Notwendigkeit einer aufwändigen Instandsetzung wegen des Ausfalls eines Leiters.

Außerdem erlaubt die redundante Ausführung der Leiter auch eine vergleichende Ermittlung der Widerstandsänderung. Somit können die Leiter jeweils durch einen Vergleich der detektierten Widerstandsänderung untereinander überwacht werden.

Besonders bevorzugt erstreckt sich wenigstens einer der elektrischen Leiter ein vorgegebenes Maß Rotorblattlängsrichtung, wobei das Maß aber kürzer als die Rotorblattlänge ist. Dieser Leiter erreicht die Rotorblattspitze nicht, sondern endet an einer vorgegebenen Stelle im Rotorblatt. Somit werden die einzelnen Leiter abhängig von der Durchbiegung des Rotorblattes unterschiedlich beeinflusst und ändern ihren Widerstand entsprechend. Daher kann aus den unterschiedlichen Werten der Widerstandsänderung auf den genauen Verlauf der Durchbiegung geschlossen werden.

In einer bevorzugten Ausführungsform der nicht mehr zur Erfindung gehörigen Variante können die kürzer als die Rotorblattlänge ausgebildeten Leiter auch als Abzweigungen eines sich über die gesamte Rotorblattlänge erstreckenden Leiters ausgebildet sein. Dazu werden sie an vorgegebenen Stellen mit dem sich über die Rotorblattlänge erstreckenden Leiter galvanisch verbunden. Dadurch ist die Auflösung bei der Erfassung der Rotorblatt-Durchbiegung entsprechend der Anzahl und der Abstände der Abzweigungen variierbar.

Um unerwünschte Verformungen der elektrischen Leiter zu vermeiden, sind diese bevorzugt mit der Tragstruktur des Rotorblattes verbunden und besonders bevorzugt in die Tragstruktur des Rotorblattes eingeschlossen. Dabei sind insbesondere bevorzugt die Leiter in die Tragstruktur eingeschlossen, die durch die Durchbiegung des Rotorblattes gedehnt werden sollen. Als Abzweigungen mit solchen Leitern galvanisch verbundene Leiter, die hier die Funktion von Rückleitern übernehmen, können auch außerhalb der Tragstruktur z. B. in Form eines Kabels frei verlegt werden.

Dabei ist es besonders vorteilhaft, in jeder Tragstruktur in Rotorblattlängsrichtung wenigstens einen elektrischen Leiter vorzusehen. Diese Anordnung gestattet auch die Erfassung der Richtung der Durchbiegung des Rotorblattes, da einer der elektrischen Leiter einer Dehnung unterworfen wird und somit seinen Widerstand verändert, nämlich erhöht, während wenigstens ein anderer Leiter nicht gedehnt wird. Vielmehr wird dieser Leiter bei geeigneter Montage einer Druckbelastung anstelle einer Zugbelastung ausgesetzt und somit eher gestaucht als gelängt. Damit ändert sich dessen Widerstandswert allenfalls in der entgegengesetzten Richtung. Er verringert sich also.

Besonders bevorzugt enthalten die elektrischen Leiter wenigstens einen vorgegebenen Aluminium-Anteil bzw. bestehen aus Aluminium. Dadurch ergibt sich bereits im Bereich einer elastischen Verformung des Leiters eine signifikante Widerstandsänderung, die vollständig reversibel und somit wiederholbar ist. Entsprechend kann die Biegung des Rotorblattes dauernd überwacht werden, ohne dass nach einer Durchbiegung ein Tausch der elektrischen Leiter oder sogar des ganzen Rotorblattes erforderlich wäre. Allerdings eignet sich grundsätzlich jeder elektrische Leiter als Sensor. Dabei sollte der Leiter aber eine vorgegebene Oberflächen-Rauhigkeit aufweisen, um eine gute mechanische Verbindung mit dem umgebenden Material zu erreichen.

Um im Fall einer Störung im Bereich der elektrischen Leiter, z. B. nach einer Überdehnung oder durch Materialfehler, nicht das gesamte Rotorblatt austauschen zu müssen, sind die Leiter vorteilhaft in einen mit der Tragstruktur verbundenen aber lösbaren Teil eingeschlossen. Mit einer solchen Ausbildungsform der Erfindung lassen sich auch bereits hergestellte Rotorblätter nachrüsten.

Nachfolgend wir die Erfindung anhand der Figuren näher erläutert. Dabei zeigt:

Fig. 1    eine Draufsicht auf ein teilweise geschnittenes Rotorblatt einer ersten Ausführungsform der Erfindung;

Fig. 2    eine Draufsicht auf ein teilweise geschnittenes Rotorblatt einer zweiten Ausführungsform der Erfindung;

Fig. 3    eine Draufsicht auf ein teilweise geschnittenes Rotorblatt einer dritten Ausführungsform der Erfindung;

Fig. 4    eine vereinfachte Seitenansicht eines in einer ersten Wiese durchgebogenen Rotorblattes;

Fig. 5    eine vereinfachte Seitenansicht eines in einer zweiten Weise durchgebogenen Rotorblattes;

Fig. 6    eine vereinfachte Querschnittsdarstellung eines Rotorblattes;

Fig. 7    eine weitere, vereinfachte Querschnittsansicht eines Rotorblattes;

Fig. 8    den Widerstandsverlauf eines erfindungsgemäß verwendeten Leiters;

Fig. 9    eine Prinzipausführung eines erfindungsgemäßen Rotorblattes nebst Messdiagrammen b) - e) bei einer analogen Phasenverschiebung;

Fig. 10   eine Prinzipdarstellung einer erfindungsgemäßen Messeinrichtung a) bei einem Rotorblatt sowie die daraus ergebenden Messdiagramme bei einer digitalen Phasenverschiebung (b) - d));

Fig. 11   eine Prinzipdarstellung eines Rotorblattes mit einer Messleitung;

Fig. 12   eine Darstellung nach Fig. 11 mit eingeprägtem Strom bzw. Spannung;

Fig. 13   eine Prinzipdarstellung eines erfindungsgemäßen Rotorblattes mit einer Messleitung bei Eingabe eines Eingangsimpulses und Messung eines Ausgangsimpulses sowie ein hierzu entsprechendes Zeitdiagramm;

Fig. 14   ein Schaltdiagramm für ein Stopuhrverfahren nebst Zeitdiagramm; und

Fig. 15   Schaltung nach Fig. 14 jedoch für einen optischen Aufbau mit Darstellung des entsprechenden Messzeitdiagramms.

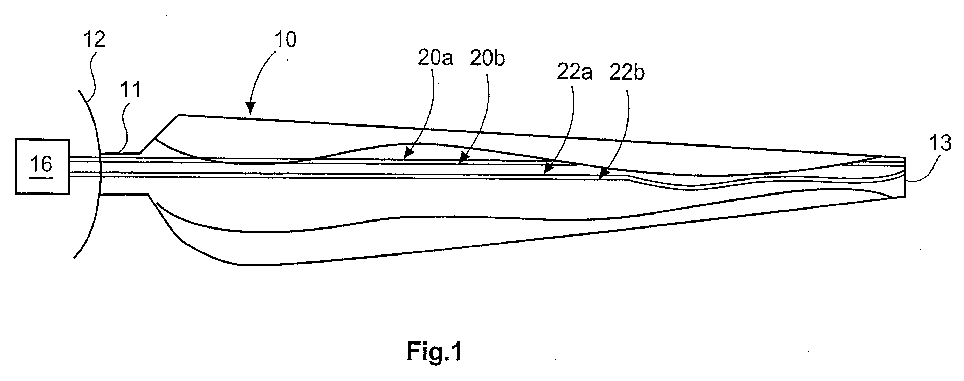

In Figur 1 ist ein Rotorblatt 10 in einer Draufsicht dargestellt. Zur Verdeutlichung des Aufbaus ist das Rotorblatt 10 teilweise aufgeschnitten, so dass der Verlauf von zwei Leitern 20, 22 erkennbar ist.

Das Rotorblatt 10 ist mit der Rotorblattwurzel 11 an der Nabe 12 einer Windenergieanlage angebracht, die hier und in den übrigen Figuren lediglich zur Orientierung angedeutet ist. In dem Rotorblatt verlaufen ein erster Leiter 20 und ein zweiter Leiter 22 von der Rotorblattwurzel 11 in Längsrichtung des Rotorblattes bis zur Rotorblattspitze 13 hin und zurück. Entsprechend umfasst jeder der Leiter 20, 22 einen Hinleiter 20a, 22a und einen Rückleiter 20b, 22b. Beide Leiter 20, 22 sind an einen Detektor 16 angeschlossen, der den elektrischen Widerstand beider Leiter 20, 22 ermittelt.

Dabei ist der erste Leiter 20 geradlinig dargestellt. Dadurch wird versinnbildlicht, dass dieser Leiter mit dem Rotorblatt derart verbunden ist, dass eine Dehnung der Rotorblattstruktur auch zu einer Dehnung dieses Leiters 20 führt. Der zweite Leiter 22 ist im Bereich der Rotorblattspitze 13 ungeradlinig verlegt dargestellt. Dadurch wird angedeutet, dass dieser Leiter mit dem Rotorblatt 10 nicht derart verbunden ist, dass er sich mit verformt. Vielmehr soll sich dieser zweite Leiter 22 gerade nicht verformen. Entsprechend ändert sich sein Widerstand vor allen Dingen abhängig von der Temperatur, so dass der Temperatureinfluss auf die Änderung des Widerstandes bekannt ist und bei der Erfassung der Widerstandsänderung des ersten elektrischen Leiters 20 berücksichtigt werden kann und nicht zu falschen Ergebnissen führt.

Der Detektor 16 kann mit der Steuerung der Windenergieanlage verbunden sein, so dass beim Betrieb der Windenergieanlage auch die Durchbiegung der Rotorblätter berücksichtigt werden kann.

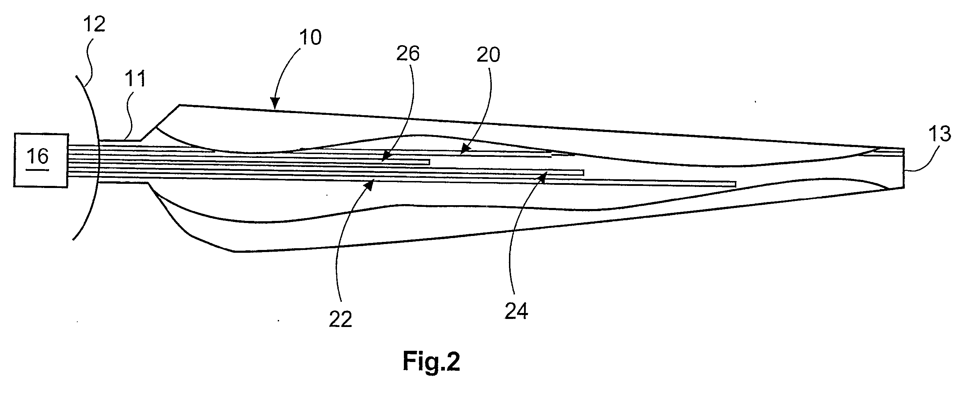

Figur 2 zeigt einen ähnlichen Aufbau, wie er bereits in Figur 1 erläutert wurde. Allerdings sind hier vier elektrische Leiter 20, 22, 24, 26 dargestellt. Ein Leiter zur Temperaturkompensation ist hier wegen besserer Übersichtlichkeit nicht dargestellt, kann aber natürlich auch bei dieser Ausführungsform vorgesehen sein.

In dieser Figur sind alle vier elektrischen Leiter 20, 22, 24, 26 derart mit dem Rotorblatt 10 verbunden, dass sie der Durchbiegung des Rotorblattes 10 folgen. Da sich diese Leiter aber in Längsrichtung des Rotorblattes 10 unterschiedlich weit erstrecken, kann aus der Widerstandsänderung der einzelnen Leiter bei Kenntnis ihrer Länge auf die Verformung des Rotorblattes 10 rückbeschlossen werden.

Wäre nur der erste Leiter 20 vorhanden, der sich bis zur Rotorblattspitze 13 erstreckt, könnte aus der Widerstandsänderung lediglich auf eine Durchbiegung an sich geschlossen werden. Da aber der zweite Leiter 22 sich nicht bis zur Rotorblattspitze 13 hin erstreckt, kann aus einer Widerstandsänderung in dem ersten Leiter 20 gefolgert werden, dass eine Durchbiegung an der Rotorblattspitze auftritt. Treten bei den übrigen Leitern 22, 24, 26 keine Widerstandsänderungen auf, womit hier und nachfolgend dehnungsabhängige Widerstandsänderungen gemeint sind, dann ist diese Durchbiegung erkennbar nur auf den äußeren, Rotorblattspitzen nahen Bereich des Rotorblattes 10 beschränkt.

Treten Widerstandsänderungen an den Leitern 20, 22 und 24 auf während der Widerstand des Leiters 26 unverändert bleibt, lässt dies die Aussage zu, das Rotorblatt wird in Längsrichtung etwa in der äußeren Hälfte durchgebogen.

Auch in dieser Figur sind die Leiter 20, 22, 24, 26 an den Detektor 16 angeschlossen, der wiederum mit der Steuerungseinrichtung zur Steuerung der Windenergieanlage verbunden sein kann.

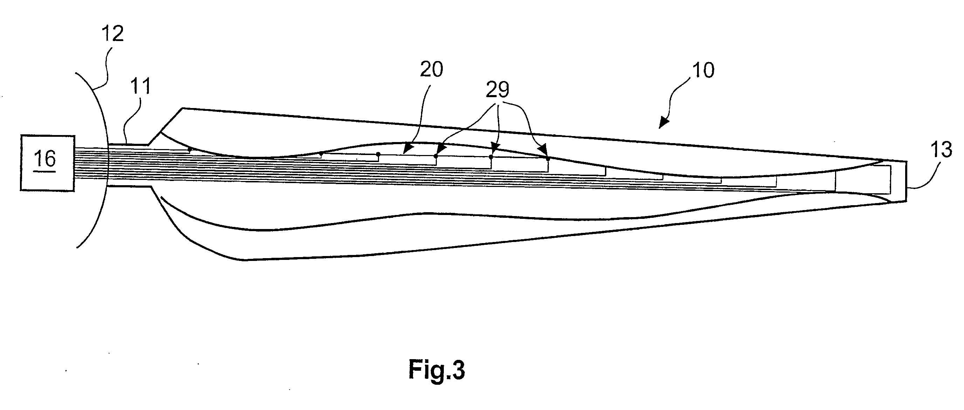

In Figur 3 ist eine alternative Ausführungsform der Erfindung dargestellt. In dem Rotorblatt 10 verläuft ein Leiter 20 von dem Detektor 16 die gesamte Rotorblattlänge entlang bis zur Rotorblattspitze 13. An diesen Leiter 20 sind Abzweigungen 28 mittels galvanischer Verbindung 29 angeschlossen. Durch die Auswahl der Anzahl und Position der Abzweigungen kann vorgegeben werden, welche Bereiche des Rotorblattes 10 mit welcher Genauigkeit überwacht werden sollen. Oder anders ausgedrückt, mit welcher Auflösung in welchem Bereich des Rotorblattes 10 eine Durchbiegung erfasst werden soll.

Insbesondere bei der in dieser Figur dargestellten Ausführungsform der Erfindung wird deutlich, dass die Verwendung eines Steckverbinders im Bereich der Rotorblattwurzel 11 (hier jedoch nicht dargestellt) vorteilhaft ist, da die Leiter 20, 28 bei der Herstellung des Rotorblattes 10 bereits an den Steckverbinder angeschlossen und die Verbindungen geprüft werden können. Bei der Montage des Rotorblattes auf der Baustelle können dann bereits konfektionierte Kabel verwendet werden, um die Verbindung zu dem Detektor herzustellen. Auf diese Weise wird eine einfache und wenig fehleranfällige Montage verwirklicht.

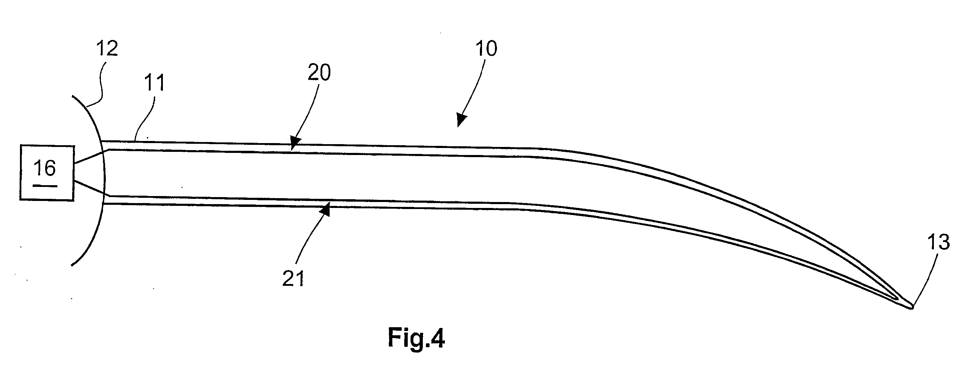

Figur 4 zeigt vereinfacht eine Seitenansicht eines durchgebogenen Rotorblattes 10. Auch in dieser Figur ist der Blattwurzelbereich 11, die angedeutete Nabe 12 und der Detektor 16 dargestellt. Dabei ist der Abstand der Leiter 20 zur Oberfläche des Rotorblattes 10 keinesfalls maßstäblich zu verstehen. Vielmehr gilt, dass die Erfassung der Durchbiegung um so genauer ist, je näher die Leiter 20 an der Oberfläche des Rotorblattes 10 verlaufen. Zur Erläuterung sollen in dieser Figur natürlich die Oberfläche des Rotorblattes 10 und die Leiter 20 unterscheidbar sein.

Das Rotorblatt 10 ist in dieser Figur nach unten gebogen. Entsprechend sei die in Biegerichtung gelegene Seite des Rotorblattes 10 die Unterseite und die gegenüberliegende Seite entsprechend die Oberseite.

Aus dieser Figur ist deutlich erkennbar, dass ein Leiter 20 an der Oberseite und ein Leiter 21 an der Unterseite des Rotorblattes 10 vorgesehen ist. Bei der dargestellten Durchbiegung des Rotorblattes wird der Leiter 20 an der Oberseite des Rotorblattes gedehnt und verändert sein Widerstand signifikant, so dass dies sicher von dem Detektor 16 erfasst werden kann. Der Leiter 21 an der Unterseite des Rotorblattes 10 wird bei dieser Durchbiegung nicht gedehnt sondern allenfalls gestaucht. Dadurch ergibt sich in diesem Leiter sicher keine Widerstandserhöhung. Folglich kann aus der Widerstandsänderung in dem Leiter 20 an der Oberseite des Rotorblattes 10 zuverlässig auf die Richtung der Durchbiegung des Rotorblattes geschlossen werden.

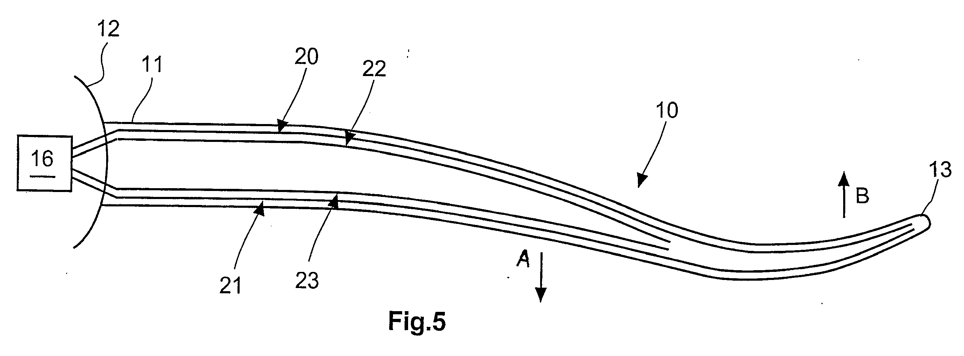

In Figur 5 ist ein Sonderfall der Durchbiegung des Rotorblattes 10 dargestellt, der jedoch keineswegs praxisfremd ist. Dabei ist das Rotorblatt in seinem mittleren Bereich in Richtung Pfeiles A (zur Unterseite hin) durchgebogen, in seinem äußeren, der Rotorblattspitze 13 nahen Bereich aber in Richtung des Pfeiles B, also zur Rotorblattoberseite hin. Eine Ausrüstung des Rotorblattes 10 mit Leitern 20, 21, die beide bis zur Rotorblattspitze 13 verlaufen, würde für beide Leiter eine Dehnung ergeben.

Sieht man einmal von einem Störungsfall ab, kann bereits daraus eine gefährliche Durchbiegung des Rotorblattes 10 abgeleitet und die Anlage entsprechend gesteuert, z. B. abgeschaltet werden. Allerdings ist daraus noch nicht der tatsächliche Verlauf der Rotorblattdurchbiegung erkennbar. Da weitere Leiter 22, 23 vorgesehen sind, die nicht bis zur Rotorblattspitze 13 verlaufen, wird bei der dargestellten Durchbiegung auch der Leiter 22 gedehnt und erhöht seinen deshalb entsprechend seinen Widerstand auch nicht erhöht. Entsprechend kann aus der Erfassung der Widerstände bzw. Widerstandsänderungen der Leiter 20, 21, 22, 23 durch den Detektor 16 jetzt auf die tatsächliche Durchbiegung des Rotorblattes 10 geschlossen werden. Dabei sei nochmals hervorgehoben, dass die Leiter 20, 21, 22, 23 sehr dicht nebeneinander und möglichst nahe an den jeweiligen Oberflächen des Rotorblattes 10 verlaufen, so dass die vermeintlich in dieser Figur erkennbare Dehnung des zweiten Leiters 23 an der Unterseite des Rotorblattes in der Realität nicht auftritt.

Alternativ zu dieser Ausführungsform mit mehreren Leitern 20, 21, 22, 23 unterschiedlicher Länge, die hier als Leiterschleifen ausgebildet sein können, kann an der Oberseite und/oder an der Unterseite des Rotorblattes 10 natürlich auch die in Figur 3 dargestellte Ausführungsform der Erfindung verwendet werden. Somit ergeben sich natürlich auch die dort beschriebenen Vorteile, insbesondere der Möglichkeit, die Genauigkeit der Erfassung der Durchbiegung durch Auswahl von Anzahl und Abstand der Abzweigungen vorzugeben.

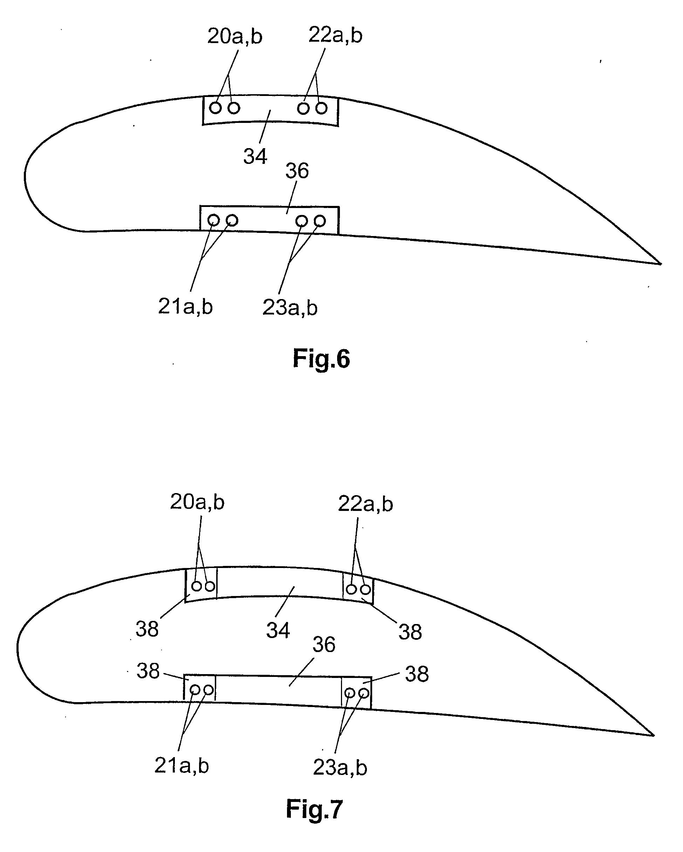

In den Figuren 6 und 7 ist vereinfacht ein Querschnitt durch ein erfindungsgemäßes Rotorblatt gezeigt. In dem in Figur 6 gezeigten Rotorblatt sind jeweils die in Längsrichtung verlaufenden Tragstrukturen 34, 36 dargestellt. Diese Tragstrukturen 34, 36 könne z. B. Rowing-Gurte sein, also aus Glasfaserbündeln und Epoxidharz gebildete Tragstrukturen, die sich im Wesentlichen über die volle Rotorblattlänge erstrecken.

In diesen Tragstrukturen 34, 36 sind elektrische Leiter 20, 21, 22, 23 eingebettet. Dabei sind Hin- und Rückleiter jeweils mit den Buchstaben a und b bezeichnet, um zu verdeutlichen, dass es sich jedes Mal um einen von der Rotorblattwurzel aus in Längsrichtung des Rotorblattes hin und zurück verlaufenden Leiter handelt.

Durch das Einarbeiten der Leiter 20, 21, 22, 23 in die Tragstrukturen 34, 36 kann der Verlauf sehr exakt festgelegt werden. Damit ist auch ein Verlauf möglichst nahe an der jeweiligen Oberfläche des Rotorblattes gewährleistet, so dass die Rückschlüsse aus den Widerstandsänderungen mit hinreichender Sicherheit gezogen werden können.

Figur 7 zeigt ebenfalls die Tragstrukturen 34, 36. Allerdings sind die Leiter 20, 21, 22, 23 hier nicht in den Tragstrukturen 34, 36 selbst eingearbeitet, sondern in Trägern 38. Diese Träger 38 können den gleichen Aufbau wie die Tragstrukturen 34, 36 aufweisen, so dass das Zusammenwirken zwischen den Trägern 38 und den Leitern 20, 21, 22, 23 exakt dem Zusammenwirken der Leiter mit den Tragstrukturen 34, 36 entspricht.

Die Träger 38 können dabei mit den Tragstrukturen 34, 36 fest aber lösbar verbunden sein. Sollte durch Materialfehler oder einen anderen Schaden der Austausch eines Leiters erforderlich sein, dann führt dies nicht zwangsläufig zu dem Verlust des vollständigen Rotorblattes bzw. zu dessen sehr aufwändiger Reparatur, sondern der entsprechende Träger 38 wird von der Tragstruktur 34, 36 gelöst und durch einen neuen ersetzt.

Durch diese Ausführungsform der Erfindung wird bei geeigneter Auswahl der Verbindung zwischen den Tragstrukturen 34, 36 und den Trägern 38 oder auch der Verbindung zwischen der Oberfläche des Rotorblattes 10 (natürlich an der Innenseite) und den Trägern 38 eine Nachrüstung bereits fertiggestellter Rotorblätter möglich.

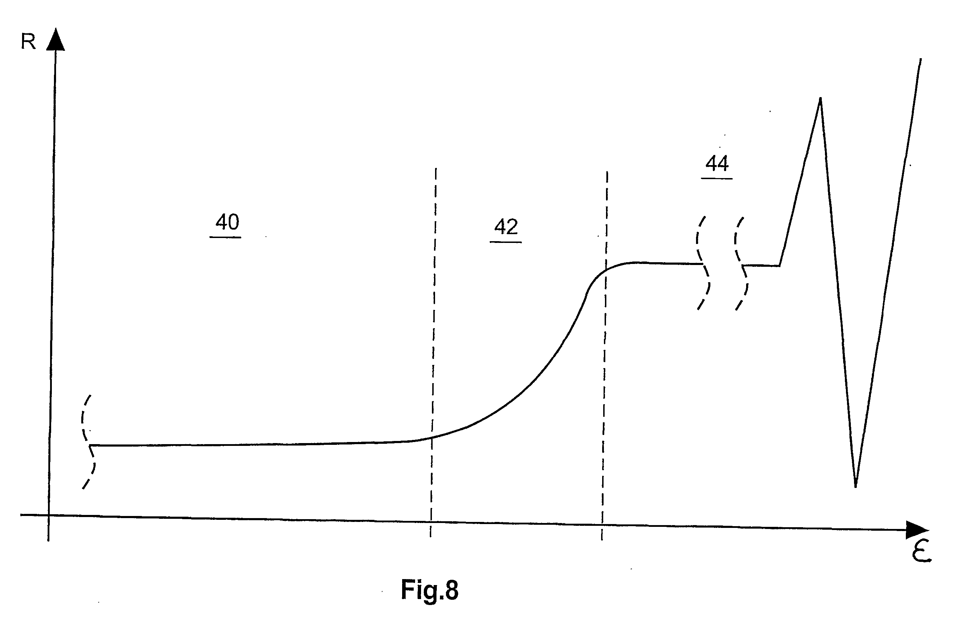

Figur 8 zeigt den empirisch ermittelten Verlauf des elektrischen Widerstandes eines Drahtes in Abhängigkeit von der Zugspannung. Der linke Bereich 40 der Kennlinie verläuft geradlinig, der mittlere Bereich 42 der Kennlinie steigt signifikant an und im rechten Bereich 44 verläuft die Kennlinie zunächst wieder geradlinig, bevor es zu einer schlagartigen Widerstandserhöhung mit anschließender Widerstandverringerung und schließlich einer Widerstandserhöhung kommt.

Der rechte Bereich 44 der Kennlinie hat sich als charakteristisch für das Abreißen des elektrischen Leiters bei zu hoher Zuspannung erwiesen. Hingegen verläuft die Widerstandsänderung im mittleren Bereich 42 der Kennlinie in einem Bereich elastischer Verformung des elektrischen Leiters. Bei den Messreihen zur Ermittlung dieser Kennlinie wurde der Bereich der elastischen Verformung des elektrischen Leiters bei einer Dehnung in Längsrichtung von unter einem Prozent der einfachen Leiterlänge und bei Aluminium insbesondere im Bereich von 0,3 Prozent ermittelt.

Eine Dehnung eines Aluminiumdrahtes in Längsrichtung um 0,3 Prozent ist demnach eine elastische Verformung, die jedoch zu einer signifikanten und detektierbaren Widerstandsänderung führt. Diese wurde in den Messreihen mit bis zu 25 $m\Omega$ ermittelt.

Da die Verformung elastisch ist, wird der elektrische Leiter dadurch nicht geschädigt und die Widerstandsänderung ist zuverlässig reproduzierbar. Entsprechend kann die Durchbiegung des Rotorblattes mit den gleichen elektrischen Leitern wiederholt erkannt werden.

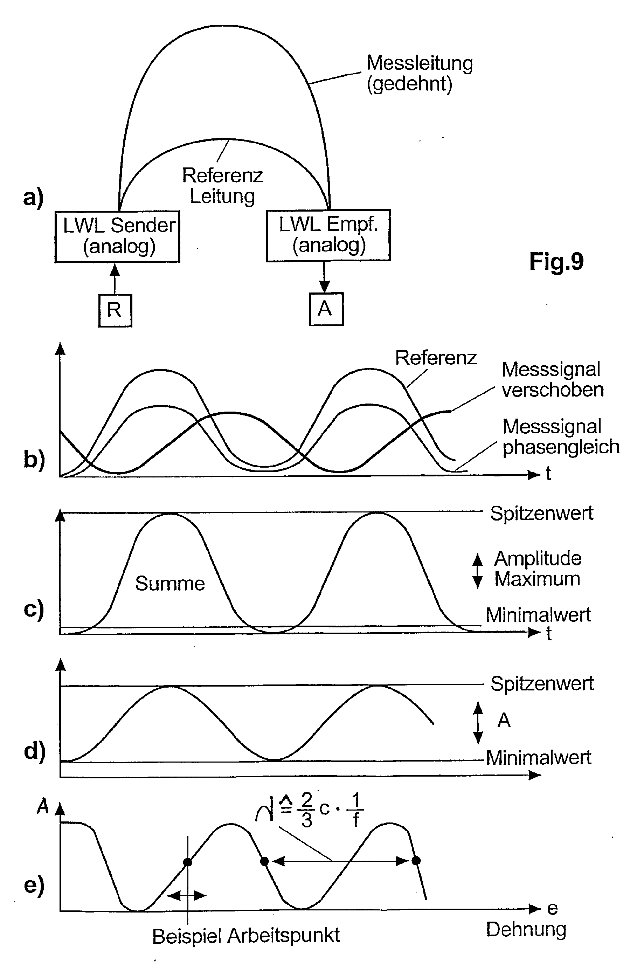

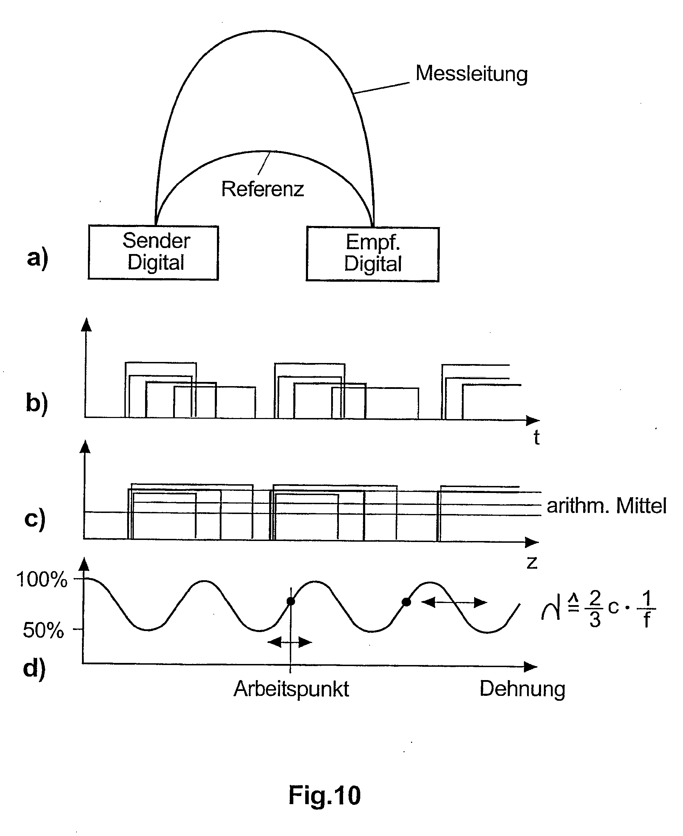

Die weiteren Fig. 9 bzw. 10 zeigen eine Ergänzung bzw. Alternative zu dem bisher beschriebenen Verfahren bzw. bisher offenbarten Lösungsansatz. Dieser Lösungsansatz kann mit analogen und/oder digitalen Signalen implementiert werden. Beiden Lösungen gemäß Fig. 9 und 10 ist gemein, dass die Laufzeit der Signale in der Schaltung nicht in die Laufzeiterkennung einfließt. Dadurch kann die tatsächliche Laufzeit in der Leitung ermittelt werden.

Der Aufbau der analogen und digitalen Lösung in den Fig. 9 und 10 ist weitgehend vergleichbar. In beiden Fällen befinden sich zwischen dem Sender und dem Empfänger zwei Leitungen, nämlich eine Referenzleitung, deren Länge sich nicht ändert und parallel dazu eine Messleitung, über deren Dehnung die Durchbiegung z.B. eines Rotorblattes erfasst wird. Neben der Tatsache, dass hier die Laufzeit zwischen der Referenzleitung und der Messleitung verglichen werden können, unterliegen diese beiden Leitungen auch gleichen thermischen Einflüssen, so dass deren Wirkung kompensiert wird.

Bei der analogen Lösung (ersten Alternative) sind im Ruhezustand das Referenzsignal (ein analoges elektrisches Signal) und das Messsignal phasengleich. Entsprechend ergibt sich ein Summensignal mit gleicher Frequenz, aber höherer Amplitude.

Kommt es durch die Dehnung der Messleitung zu einer Phasenverschiebung, ändert sich natürlich auch das Summensignal. Einerseits ist der Spitze-Spitze-Wert geringer als bei phasengleichen Signalen, weiterhin ergibt sich auch eine geänderte Hüllkurve für das Summensignal.

Wie solche Änderungen erfasst werden, ist im Stand der Technik ausreichend bekannt. Es ist leicht erkennbar, dass bis zu einer Phasenverschiebung von 180° die Amplitude geringer wird. Über diesen Bereich hinaus bis zu einer vollständigen Periode müssen die Vorzeichen mit berücksichtigt werden, um eine zuverlässige Aussage zur Phasenlage zu erreichen.

Bei der digitalen Lösung ergibt sich bei phasengleichem Eingang der Signale am Empfänger der geringste arithmetische Mittelwert (natürlich auch abhängig vom Tastverhältnis). Ein weiterhin gleiches Tastverhältnis vorausgesetzt nimmt der arithmetische Mittelwert aber mit zunehmender Phasenverschiebung zwischen Referenzsignal und Messsignal zu. Dieser ist daher ein Maß für die Phasenverschiebung der Signale am Empfänger.

Die oben beschriebenen Verfahren lassen sich mit elektrischen Signalen, optischen Signalen und grundsätzlich auch mit akustischen Signalen verwirklichen. Grundsätzlich gilt, dass bei geringer Dehnung die Wahl einer hohen Frequenz vorteilhaft ist (d.h. einer Frequenz von mehr als 1 kHz, bevorzugt mehrere MHz), während bei großer Dehnung die Wahl einer niedrigen Frequenz zu bevorzugen ist, um jeweils eine Phasenverschiebung im Bereich innerhalb einer Periode zu erhalten.

Die vorliegende Anmeldung verweist zum Hintergrundverständnis und bezüglich der Ausführbarkeit auch ausdrücklich auf den Inhalt der deutschen Patentanmeldungen 38 21 642 sowie 37 12 780. Aus diesen Anmeldungen ist bekannt, wie Längen- oder Abstandsänderungen, die durch Änderung physikalischer Größen wie Temperatur oder Druck bedingt sind, mittels Laufzeitmessung von elektrischen Signalen in einem der physikalischen Größe ausgesetzten Lichtwellenleiter bestimmt werden können. Über einen optischen Multivibrator werden Signale in den Lichtwellenleiter eingespeist. Dabei wird über einen hochfrequenten Zähler die Gesamtlaufzeit mehrerer Pulse bestimmt. Durch Vergleich mit einem Normzählergebnis (Referenz) wird die Abweichung des tatsächlich ermittelten Zählergebnisses von diesem Normzählergebnis festgestellt, hieraus die eintretende Längen- oder Abstandsdifferenz ermittelt und diese Längen- bzw. Abstandsdifferenz in die zu bestimmende physikalische Größe umgesetzt.

Aus DE 37 12 780 ist ein Verfahren und eine Einrichtung zur genauen und schnellen Messung der Länge einer zu testenden Leitung bis zu einer elektrischen Diskontinuität in der Leitung bekannt, wobei eine Impulsflanke durch einen Impulsflankengenerator einem Ende der Leitung zugeführt wird, die von der Diskontinuität zu dem einen Ende zurücklaufende reflektierte Impulsflanke detektiert wird, die Erzeugung einer Impulsflanke nach einer vorgegebenen Zeit nach der Detektierung der reflektierten Impulsflanke ausgelöst wird, so dass der Impulsflankengenerator veranlasst wird, wiederholt die Impulsflanke zu erzeugen mit einer Frequenz, die in Beziehung steht zur Laufzeitverzögerung in der Länge der Leitung und diese Frequenz gemessen wird. DE 37 12 780 beschreibt somit, wie eine "Diskontinuität" in der Leitung erfasst werden kann und zeigt auch die Möglichkeit auf, anstelle der Laufzeit den Kehrwert, also nämlich die Frequenz zu verwenden.

Gemäß DE 38 21 642 wird die Laufzeit in einem Leiter zwischen einem Sender und Empfänger erfasst und dies geschieht mittels des sogenannten Stoppuhrverfahrens, d.h. mit der Aussendung eines Impulses beginnt die Zählung von Takten eines Signals mit einer deutlich höheren Frequenz und diese Zählung wird solange fortgesetzt, bis der Empfänger den Impuls empfängt. Der Zählwert ist dann das Maß für die Laufzeit.

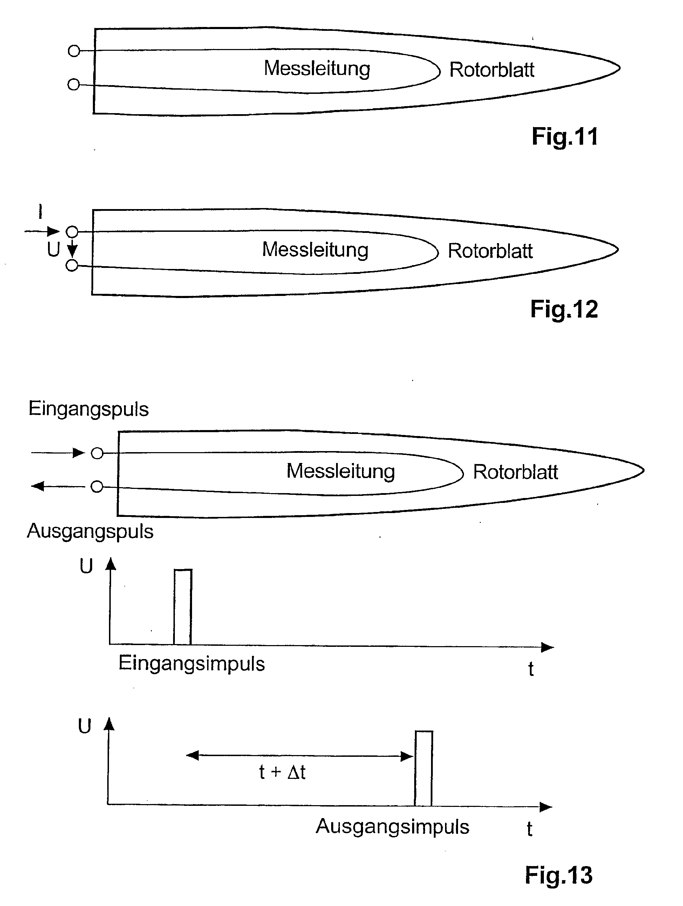

Gemäß Fig. 11 ist nunmehr (wie auch schon in Fig. 9 und 10) grundsätzlich ein Rotorblatt gezeigt mit einer darin angeordneten Messleitung, welche bevorzugt in der Oberfläche des Rotorblattes als Messdraht (oder LWL) eingelassen ist). Mechanische Lasten (Windlasten) biegen das Rotorblatt und die Messleitung wird in der Länge gedehnt bzw. gestaucht. Diese Laständerung ist also proportional zur Längenänderung

$$\Delta F \sim \Delta l.$$

Es ist mit einer Längenänderung von 0,0% bis 0,2% zu rechnen, die 0,0% bis 100% Last entsprechen. Aufgabe ist es also, die Längenänderung mit einer möglichst hohen Auflösung zu bestimmen.

Als erste Lösung kann der ohmsche Widerstand des Drahtes proportional zur Länge und damit auch zur Last angenommen werden.

$$\Delta R \sim \Delta l \sim \Delta F.$$

In den Draht wird ein Strom eingeprägt und der Spannungsabfall darüber gemessen, wie es in Fig. 12 dargestellt ist.

Versuche haben gezeigt, dass dieses Prinzip funktioniert.

Es gibt aber einige Probleme, weil eine sehr hohe Messgenauigkeit erforderlich ist (< 0,002%), da das Signal 0,2% vom Absolutwert beträgt und es noch in mindestens 100 Abstufungen unterteilt werden muss. Ferner ändert sich der ohmsche Widerstand des Drahtes sehr stark mit der Drahttemperatur. Das Signal ist überlagert mit Störungen, die durch elektrische und magnetische Felder erzeugt werden können. Dies macht sich besonders bei Gewittern bemerkbar. Der Draht mit der angeschlossenen Elektronik kann durch direkte Blitztreffer beschädigt werden.

Eine alternative Lösung ist in Fig. 13 dargestellt. Dabei wird die Länge des Laufdrahts durch die Laufzeit eines Impulses bestimmt. Die Geschwindigkeit beträgt 2/3 Lichtgeschwindigkeit, also etwa 200.000 km/s.

Wie in der Fig. 13 zu sehen, ist der

$$\Delta t \sim \Delta l \sim \Delta F$$

und die Änderung der Laufzeit ist ein Maß für die Last.

Bei einer angenommenen Leitungslänge von 40m ergibt sich t = 200 ns mit einer Überlagerung von $\Delta t$ von 0 bis 400ps.

Da diese Zeit messtechnisch nicht so einfach zu erfassen ist, wird der Kehrwert gebildet, nämlich als

$$f = \frac{1}{t + \Delta t}$$

Nun ergibt sich eine Frequenz.

Frequenzwerte sind sehr einfach zu bestimmen und der Messwert lässt sich beliebig fein auflösen (durch Anpassen der Torzeit des Frequenzzählers).

Aus der Laufzeit des Signals wird nun eine Frequenz gebildet, indem der ankommende Impuls sofort einen neuen Impuls in die Leitung schickt (Stoppuhrverfahren). Die Anzahl abgesendeter Impulse pro Sekunde bildet die Frequenz.

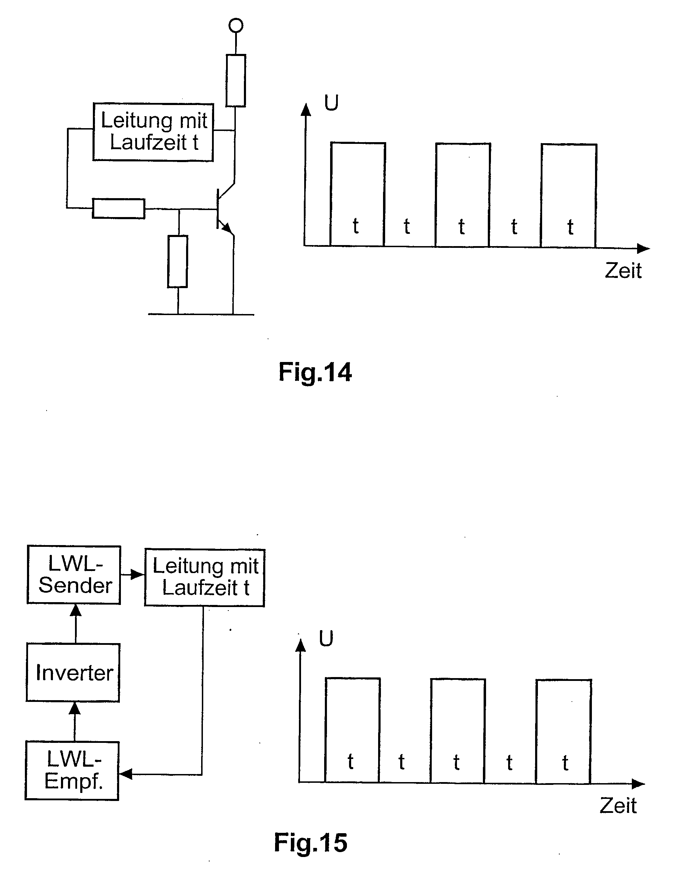

Fig. 14 zeigt ein entsprechendes Schaltbild hierfür nebst Diagramm.

Der Impuls wird durch einen Pegelwechsel ersetzt und wie erwartet stellt sich eine Frequenz von

$$f = \frac{1}{2t} \ ein, \ also \ mit \ t = \frac{l}{2\left(\frac{2}{3}c\right)}.$$

Bei einer Leitungslänge von 40m ergibt das

$$f = \frac{40m}{2(200 \cdot 10^{-9} m/s + \Delta t)} = 2,5 \ MHz$$

Durch Lasteinwirkung ergeben sich Frequenzen zwischen 2,5MHz und 2,505MHz, also eine Werteänderung 5000Hz.

Ein Frequenzzähler mit einer Torzeit von 20ms würde 50 Werte pro Sekunde mit einer Auflösung der Last von 1% liefern. Diese Werte bestehen dann bereits aus Mittelwerten von 50 einzelnen Längenmessungen.

Es ergibt sich also dann der Vorteil, dass keine empfindliche Analogsensorik erforderlich ist, da ein hoher Störabstand (0V oder 10V) vorhanden ist und sich keine störende Laufzeitänderungen durch Temperaturschwankungen ergeben.

Dies gilt insbesondere gemäß der Lösung nach Fig. 9 und 10, wo neben der Messleitung auch eine Referenzleitung ausgebildet ist.

Die zuvor beschriebene Lösung lässt sich auch optisch realisieren. Dabei wird ein Draht durch einen Lichtwellenleiter ersetzt und die Rückkopplung durch LWL-Sender und LWL-Empfänger realisiert, wie dies in Fig. 15 dargestellt ist.

Hierbei ergeben sich besonders die Vorteile, dass keine empfindliche Analogsensorik erforderlich ist, da ein hoher Störabstand (Licht an oder aus) vorhanden ist, keine störenden Laufzeitänderungen durch Temperaturschwankung sich ergeben, keine Störung des LWL-Kabels durch elektrische oder magnetische Felder gegeben ist und auch keine Auswirkungen durch einen Blitzschlag zu erwarten sind.

Es ist zu erwarten, dass in der Praxis die Biegung des Blattes schon bei einer Längenänderung von weniger als 1 mm deutlich zu messen ist. Soweit in der vorliegenden Anmeldung beschrieben ist, ist die erfindungsgemäße Lösung zur Längenänderung des Rotorblattes einzusetzen, so sei darauf verwiesen, dass auch die Torsion des Rotorblattes messbar ist, wenn die Messleitung entsprechend spiralförmig auf der Oberfläche des Rotorblattes angeordnet wird, so dass eine Torsion des Rotorblattes auch automatisch zu einer Längenänderung der aufgewickelten Messleitung führt.

Insbesondere können auch mit der erfindungsgemäßen Messmethode Teilabschnitte des Rotorblattes hinsichtlich ihrer Belastung wie auch Längendehnung messtechnisch überwacht werden, was insbesondere im Blattspitzenbereich bei auftretenden Böen sehr hilfreich sein kann, um die Gefahren im konkreten Einzelfall gegebenen Blattlasten besser als bisher zu erfassen.

Ausdrücklich sei darauf verwiesen, dass das in den Fig. 11 bis 14 Offenbarte selbstverständlich auch mit dem ohne weiteres kombinierbar ist, was in den anderen Figuren offenbart ist. Wenn von einem Stoppuhrverfahren die Rede ist, so sei hiermit klargestellt, dass dies unter anderem bedeutet, dass die Stoppuhr bei Empfang des ausgesendeten Impulses gestoppt und gleichzeitig wieder gestartet wird und mithin die Frequenz der Stopp/Startzyklen auf einen bestimmten Zeitbereich, z.B. 1 Sekunde, bedeutet.

Es ist dabei jedwede Form eines Pulssignales denkbar, u.a. auch ein Chirp-Pulssignal gemäß der Sinus x/x-Funktion.

**Patentansprüche**

1. Windenergieanlage mit einer Vorrichtung zur Messung der Durchbiegung oder Längenänderung eines Erzeugnisses der Windenergieanlage, nämlich eines Rotorblattes (10) oder eines Turms der Windenergieanlage, wobei in dem Erzeugnis ein Leiter (20, 22, 24, 26) verlegt ist, welcher bei Durchbiegung und/oder Längenänderung des Erzeugnisses eine Längenänderung erfährt, wobei mittels eines Signalgenerators ein Signal, bevorzugt ein Pulssignal, erzeugt und am Eingang der Leitung (20, 22, 24, 26) in diese eingespeist wird, wobei am Ende der Leitung (20, 22, 24, 26) ein Signalempfänger angeordnet ist, welcher bei Empfang des Signals des Signalgenerators diesen dazu veranlasst, ein weiteres Signal auszusenden und dass eine Einrichtung ausgebildet ist, mittels der die Anzahl der ausgesendeten Signale innerhalb einer vorbestimmten Zeiteinheit gemessen wird und aus dem Vergleich der gemessenen Anzahl der ausgesendeten Signale pro bestimmter Zeiteinheit mit einer gespeicherten Tabelle die Durchbiegung und/oder Verlängerung des Erzeugnisses, nämlich des Rotorblattes (10) oder des Turms der Windenergieanlage, ermittelbar ist.

2. Windenergieanlage mit einer Vorrichtung zur Messung der Durchbiegung oder Längenänderung eines Erzeugnisses, nämlich eines Rotorblattes (10) oder eines Turms einer Windenergieanlage, wobei in dem Erzeugnis ein Leiter (20, 22, 24, 26) verlegt ist, welcher bei einer Durchbiegung und/oder Längenänderung des Erzeugnisses eine Längenänderung erfährt, wobei mittels eines Signalgenerators ein Signal, bevorzugt ein Pulssignal, erzeugt und am Eingang der Leitung (20, 22, 24, 26) in diese eingespeist wird, wobei jedoch am Ende der Leitung (20, 22, 24, 26) ein Reflektor angeordnet ist, welcher das Signal vom Signalgenerator zum Eingang der Leitung (20, 22, 24, 26) reflektiert, wo dieses bei Eingang von einem Signalempfänger empfangen wird und was dann die Auslösung eines weiteren Signals durch den Signalgenerator auslöst, wobei Signalgenerator und Signalempfänger miteinander verbunden sind und die Zeit zwischen dem Signalempfang und der Auslösung eines Folgesignals durch den Signalgenerator stets im Wesentlichen konstant ist und dass eine Einrichtung ausgebildet ist, mittels der die Anzahl der ausgesendeten Signale innerhalb einer vorbestimmten Zeiteinheit gemessen wird und aus dem Vergleich der gemessenen Anzahl der ausgesendeten Signale pro bestimmter Zeiteinheit mit einer gespeicherten Tabelle die Durchbiegung und/oder Längenänderung des Erzeugnisses, nämlich des Rotorblattes (10) oder des Turms der Windenergieanlage, ermittelbar ist.

3. Windenergieanlage nach Anspruch 1 oder 2, **dadurch gekennzeichnet, dass** die Leitung (20, 22, 24, 26) eine elektrische Leitung (20, 22, 24, 26) oder ein Lichtwellenleiter ist.

4. Windenergieanlage nach einem der vorhergehenden Ansprüche,

wobei der Leiter (20, 22, 24, 26) mit dem Erzeugnis, also mit dem Rotorblatt (10) oder dem Turm der Windenergieanlage, wenigstens an seinen Enden formschlüssig verbunden ist.

5. Windenergieanlage nach einem der vorhergehenden Ansprüche,
wobei der Leiter (20, 22, 24, 26) wenigstens in einem bestimmten Bereich mit dem Erzeugnis, also dem Rotorblatt (10) oder dem Turm der Windenergieanlage, formschlüssig verbunden ist und bei einer Durchbiegung oder Längung des Erzeugnisses der Leiter (20, 22, 24, 26) nur in diesem vorbestimmten Bereich gedehnt wird.

6. Verfahren zur Messung der Durchbiegung oder Längenänderung eines Rotorblattes (10) oder eines Turms einer Windenergieanlage mit einer Vorrichtung nach Anspruch 1 oder 2.

**Claims**

1. Wind turbine having a device for measuring the bending or length change of a product of the wind turbine, that is to say, a rotor blade (10) or a tower of the wind turbine, there being laid in the product a conductor (20, 22, 24, 26) which is subjected to a change of length when the product bends and/or changes length, a signal, preferably a pulse signal, being produced by means of a signal generator and fed into the line (20, 22, 24, 26) at the input thereof, there being arranged at the end of the line (20, 22, 24, 26) a signal receiver which, when the signal of the signal generator is received, causes it to transmit another signal and wherein a device is constructed by means of which the number of transmitted signals within a predetermined time unit is measured and, from the comparison of the measured number of transmitted signals per specific time unit with a stored table, the bending and/or the extension of the product, that is to say, the rotor blade (10) or the tower of the wind turbine, can be established.

2. Wind turbine having a device for measuring the bending or length change of a product, that is to say, a rotor blade (10) or a tower of a wind turbine, there being laid in the product a conductor (20, 22, 24, 26) which is subjected to a change of length when the product bends and/or changes length, a signal, preferably a pulse signal, being produced by means of a signal generator and fed into the line (20, 22, 24, 26) at the input thereof, but there being arranged at the end of the line (20, 22, 24, 26) a reflector which reflects the signal from the signal generator to the input of the line (20, 22, 24, 26), where the signal is received at the input by a signal receiver and which then actuates the release of another signal by the signal generator, the signal generator and the signal receiver being connected to each other and the time between the signal receipt and the release of a subsequent signal by the signal generator always being substantially constant, and wherein a device is constructed by means of which the number of transmitted signals within a predetermined time unit is measured and, from the comparison of the measured number of transmitted signals per specific time unit with a stored table, the bending and/or the change of length of the product, that is to say, the rotor blade (10) or the tower of the wind turbine, can be established.

3. Wind turbine according to claim 1 or claim 2, **characterised in that** the line (20, 22, 24, 26) is an electrical line (20, 22, 24, 26) or an optical waveguide.

4. Wind turbine according to any one of the preceding claims, wherein the conductor (20, 22, 24, 26) is connected to the product, that is to say, to the rotor blade (10) or tower of the wind turbine, in a positive-locking manner at least at the ends thereof.

5. Wind turbine according to any one of the preceding claims, wherein the conductor (20, 22, 24, 26), at least in a specific region, is connected to the product, that is to say, to the rotor blade (10) or tower of the wind turbine, in a positive-locking manner and, in the event of bending or lengthening of the product, the conductor (20, 22, 24, 26) is expanded only in this predetermined region.

6. Method for measuring the bending or length change of a rotor blade (10) or a tower of a wind turbine having a device according to claim 1 or claim 2.

**Revendications**

1. Éolienne avec un dispositif pour la mesure de la courbure ou de la modification de longueur d'un élément de l'éolienne, à savoir d'une pale de rotor (10) ou d'une tour de l'éolienne, un conducteur (20, 22, 24, 26) étant posé dans l'élément, lequel subit lors de la courbure et/ou de la modification de longueur de l'élément une modification de longueur, un signal, de préférence un signal pulsé, étant généré à l'aide d'un générateur de signal et étant transmis à l'entrée de la ligne de conduction (20, 22, 24, 26) dans celle-ci, à l'extrémité de la ligne de conduction (20, 22, 24, 26) étant agencé un récepteur de signal qui le pousse lors de la réception du signal du générateur de signal à émettre un autre signal et en ce qu'un dispositif est réalisé, à l'aide duquel le nombre de signaux émis dans une unité de temps prédéterminée est mesuré et la courbure et/ou la modification de longueur de l'élément, à savoir de la pale de rotor (10) ou de la tour de l'éolienne, peut être déterminée à partir de la comparaison du nombre mesuré de signaux émis par unité de temps déterminée avec une table enregistrée.

2. Éolienne avec un dispositif pour la mesure de la courbure ou de la modification de longueur d'un élément, à savoir d'une pale de rotor (10) ou d'une tour de l'éolienne, un conducteur (20, 22, 24, 26) étant posé dans l'élément, lequel subit lors d'une courbure et/ou de la modification de longueur de l'élément une modification de longueur, un signal, de préférence un signal pulsé, étant généré à l'aide d'un générateur de signal et étant transmis à l'entrée de la ligne de conduction (20, 22, 24, 26) dans celle-ci, toutefois à l'extrémité de la ligne de conduction (20, 22, 24, 26) étant agencé un réflecteur qui réfléchit le signal du générateur de signal à l'entrée de la ligne de conduction (20, 22, 24, 26) où celui-ci est reçu lors de l'entrée par un récepteur de signal et ce qui déclenche le déclenchement d'un autre signal par le générateur de signal, le générateur de signal et le récepteur de signal étant reliés entre eux et le temps entre la réception de signal et le déclenchement d'un signal suivant par le générateur de signal étant toujours sensiblement constant et en ce qu'un dispositif est réalisé, à l'aide duquel le nombre de signaux émis dans une unité de temps prédéterminée est mesuré et la courbure et/ou la modification de longueur de l'élément, à savoir de la pale de rotor (10) ou de la tour de l'éolienne, peut être déterminée à partir de la comparaison du nombre mesuré de signaux émis par unité de temps déterminée avec une table enregistrée.

3. Eolienne selon la revendication 1 ou 2, **caractérisée en ce que** la ligne de conduction (20, 22, 24, 26) est un câble électrique (20, 22, 24, 26) ou un câble à fibres optiques.

4. Eolienne selon l'une quelconque des revendications précédentes, le conducteur (20, 22, 24, 26) étant relié à complémentarité de formes à l'élément, donc à la pale de rotor (10) ou à la tour de l'éolienne, au moins à ses extrémités.

5. Eolienne selon l'une quelconque des revendications précédentes, le conducteur (20, 22, 24, 26) étant relié à complémentarité de formes au moins dans une zone déterminée à l'élément, donc à la pale de rotor (10) ou à la tour de l'éolienne et lors d'une courbure ou d'un allongement de l'élément, le conducteur (20, 22, 24, 26) étant étiré seulement dans cette zone prédéterminée.

**6.** Procédé de mesure de la courbure ou de la modification de longueur d'une pale de rotor (10) ou d'une tour d'une éolienne avec un dispositif selon la revendication 1 ou 2.

Fig.1

**Fig.2**

EP 1 583 906 B1

**Fig.3**

EP 1 583 906 B1

**Fig.4**

EP 1 583 906 B1

**Fig.5**

EP 1 583 906 B1

20a,b    22a,b

34

36

21a,b    23a,b

**Fig.6**

20a,b         22a,b

38         34         38

36

38         38

21a,b         23a,b

**Fig.7**

Fig.8

**Fig.9**

a)

Messleitung
(gedehnt)

Referenz
Leitung

LWL Sender
(analog)

LWL Empf.
(analog)

R

A

b)

Referenz

Messsignal
verschoben

Messsignal
phasengleich

t

c)

Spitzenwert

Summe

Amplitude
Maximum

Minimalwert

t

d)

Spitzenwert

A

Minimalwert

e)

A

$\curlywedge \hat{=} \frac{2}{3} c \cdot \frac{1}{f}$

Beispiel Arbeitspunkt

e
Dehnung

Fig.10

Messleitung    Rotorblatt

**Fig.11**

I

U

Messleitung    Rotorblatt

**Fig.12**

Eingangspuls

Messleitung    Rotorblatt

Ausgangspuls

U

Eingangsimpuls                    t

U

t + Δt

Ausgangsimpuls    t

**Fig.13**

**Fig.14**

**Fig.15**

**EP 1 583 906 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1359321 A
- DE 10113039 A
- DE 3821642
- DE 3712780